# EUROPEAN PATENT SPECIFICATION

(11) **EP 4 563 383 B1**
(45) Date of publication and mention of the grant of the patent: **29.07.2026**
(21) Application number: 24208284.0
(22) Date of filing: 23.10.2024
(51) Int. Cl.: B60K 11/02, B60K 6/405, B60K 6/445, B60K 1/02, F16H 57/02, F16H 57/04, H02K 9/19, H05K 7/20

(54) **HYBRID ELECTRIC VEHICLE**
HYBRIDELEKTROFAHRZEUG
VÉHICULE ÉLECTRIQUE HYBRIDE

(30) Priority: 20.11.2023 JP 2023196989
(43) Date of publication of application: 04.06.2025
(73) Proprietor: TOYOTA JIDOSHA KABUSHIKI KAISHA, Toyota-shi, Aichi-ken 471-8571 (JP)
(72) Inventor: KUNIFUDA, Hiroki, Japan 471-8571 (JP)
(74) Representative: D Young & Co LLP

(56) References cited:
- EP-A1- 3 988 362
- WO-A1-2021/140807
- DE-A1- 102021 125 659
- US-B1- 10 272 767

## Description

### FIELD OF THE INVENTION

The present invention relates to a hybrid electric vehicle including a mechanical-electrical integrated unit.

### BACKGROUND OF THE INVENTION

There is well known a hybrid electric vehicle including: an electric motor; a power transmission device to which the electric motor is connected in a power transmittable manner; first electrical equipment; second electrical equipment; a drive casing that houses a drive apparatus including the electric motor and the power transmission device; a first electrical casing that houses the first electrical equipment; and a second electrical casing that houses the second electrical equipment, wherein the drive casing, the first electrical casing and the second electrical casing are integrally arranged, and cooperate to constitute a mechanical-electrical integrated unit. For example, JP 2022-152851 A discloses such a vehicle including an in-vehicle unit as the mechanical-electrical integrated unit. In the vehicle disclosed in this Japanese Patent Application Publication, the mechanical-electrical integrated unit has a laminated structure in which the drive casing, the first electrical casing and the second electrical casing are arranged in this order of description in a vertical direction of the vehicle. Another known hybrid electric vehicle is disclosed by EP3 988 362 A1.

### SUMMARY OF THE INVENTION

By the way, where the mechanical-electrical integrated unit having the laminated structure is installed in a vehicle, a degree of freedom in installing the mechanical-electrical integrated unit could be reduced depending on an installation space or components of the mechanical-electrical integrated unit. It might be possible to place the first electrical casing and the second electrical casing separately in an outer periphery of the drive casing. On the other hand, in a hybrid electric vehicle, there is a case in which the first and second electrical equipment need to be cooled. Further, there is a case in which such a hybrid electric vehicle is provided with a water-cooling oil cooler configured to cool an oil used for cooling the electric motor. Thus, it is necessary to provide a water passage for cooling the first electrical equipment, a water passage for cooling the second electrical equipment and a water passage for cooling the oil cooler. The provision of these water passages for cooling the first electrical equipment, the second electrical equipment and the oil cooler could complicate a cooling structure.

The present invention was made in view of the background art described above. It is therefore an object of the present invention to provide a hybrid electric vehicle in which a cooling structure can be simplified while a degree of freedom in installing a mechanical-electrical integrated unit can be increased.

The object indicated above is achieved according to the following aspects of the present invention.

According to a first aspect of the invention, there is provided a hybrid electric vehicle including: (a) an electric motor; (b) a power transmission device to which the electric motor is connected in a power transmittable manner; (c) first electrical equipment; (d) second electrical equipment; (e) a drive casing that houses a drive apparatus including the electric motor and the power transmission device; (f) a first electrical casing that houses the first electrical equipment; and (g) a second electrical casing that houses the second electrical equipment, wherein the drive casing, the first electrical casing and the second electrical casing are integrally arranged, and cooperate to constitute a mechanical-electrical integrated unit. The hybrid electric vehicle further includes: (h) a first water-cooling passage that is provided in the first electrical casing for cooling the first electrical equipment; (i) a second water-cooling passage that is provided in the second electrical casing for cooling the second electrical equipment; and (j) a water-cooling oil cooler configured to cool an oil for cooling the electric motor. The drive casing has a first wall surface, a second wall surface, a third wall surface, a fourth wall surface, a fifth wall surface and a sixth wall surface that cooperate to define a space in which the drive apparatus is housed. The first electrical casing and the second electrical casing are separately disposed on respective two of the first wall surface, the second wall surface, the third wall surface, the fourth wall surface, the fifth wall surface and the sixth wall surface. The water-cooling oil cooler is disposed in one of the first electrical casing and the second electrical casing. The one of the first electrical casing and the second electrical casing is provided with a cooler water-cooling passage for cooling the water-cooling oil cooler, such that the cooler water-cooling passage is in communication with one of the first water-cooling passage and the second water-cooling passage which is provided in the one of the first electrical casing and the second electrical casing.

According to a second aspect of the invention, in the hybrid electric vehicle according to the first aspect of the invention, the one of the first electrical casing and the second electrical casing is located on one of opposite sides of the drive casing which are opposite to each other in a horizontal direction of the hybrid electric vehicle and in a direction of an axis of the electric motor, and the other of the first electrical casing and the second electrical casing is located on an upper side of the drive casing in a vertical direction of the hybrid electric vehicle.

According to a third aspect of the invention, in the hybrid electric vehicle according to the first aspect of the invention, there is further provided an engine that is connected to the power transmission device in a power transmittable manner. The engine is located on one of opposite sides of the drive casing which are opposite to each other in a horizontal direction of the hybrid electric vehicle, and is disposed on one of the first wall surface, the second wall surface, the third wall surface, the fourth wall surface, the fifth wall surface and the sixth wall surface, which is opposed to the engine in a direction of an axis of the electric motor. The one of the first electrical casing and the second electrical casing is located on the other of the opposite sides of the drive casing in the horizontal direction. The other of the first electrical casing and the second electrical casing is located on an upper side of the drive casing in a vertical direction of the hybrid electric vehicle.

According to a fourth aspect of the invention, in the hybrid electric vehicle according to any one of the first through third aspects of the invention, there are further provided a high-voltage battery and a low-voltage battery. The first electrical equipment includes an inverter that is configured to convert a DC power supplied from the high-voltage battery, into an AC power that is to be supplied to the electric motor. The second electrical equipment includes a DC-DC converter that is configured to lower a voltage of the high-voltage battery and to charge the low-voltage battery.

According to a fifth aspect of the invention, in the hybrid electric vehicle according to the fourth aspect of the invention, the second electrical equipment further include a reactor included in a boost converter that is configured to boost the DC power supplied from the high-voltage battery and to supply the boosted DC power to the inverter.

In the hybrid electric vehicle according to the first aspect of the invention, the first electrical casing and the second electrical casing are separately disposed on respective two of the first wall surface, the second wall surface, the third wall surface, the fourth wall surface, the fifth wall surface and the sixth wall surface. Thus, the first electrical casing and the second electrical casing are located separately, making it easier for the mechanical-electrical integrated unit to be installed in the hybrid electric vehicle. In other words, the mechanical-electrical integrated unit can be made smaller in size. The water-cooling oil cooler is provided in one of the first electrical casing and the second electrical casing, and the one of the first electrical casing and the second electrical casing is provided with the cooler water-cooling passage for cooling the water-cooling oil cooler, such that the cooler water-cooling passage is in communication with one of the first water-cooling passage and the second water-cooling passage which is provided in the one of the first electrical casing and the second electrical casing. Thus, the cooler water-cooling passage for cooling the oil cooler is integrated with one of the first water-cooling passage for cooling the first electrical equipment and the second water-cooling passage for cooling the second electrical equipment, thereby resulting in a total of two water passages for cooling. In other words, it is possible to eliminate a water pipe or water passage dedicated exclusively to the oil cooler. Thus, the cooling structure can be simplified while increasing the degree of freedom of installation of the mechanical-electrical integrated unit.

In the hybrid electric vehicle according to the second aspect of the invention, the one of the first electrical casing and the second electrical casing is located on one of the opposite sides of the drive casing which are opposite to each other in the horizontal direction and in the direction of the axis of the electric motor, while the other of the first electrical casing and the second electrical casing is located on the upper side of the drive casing in the vertical direction of the hybrid electric vehicle. These arrangements make it easier for the mechanical-electrical integrated unit to be appropriately installed in the hybrid electric vehicle. Further, since the oil cooler provided in the one of the first electrical casing and the second electrical casing is located on one of the opposite sides of the electric motor in the direction of the axis of the electric motor, thereby making it possible to simplify the cooling structure of the electric motor.

In the hybrid electric vehicle according to the third aspect of the invention, the engine is located on one of the opposite sides of the drive casing which are opposite to each other in the horizontal direction, and is disposed on one of the six wall surfaces, which is opposed to the engine in the direction of the axis of the electric motor. Further, the one of the first electrical casing and the second electrical casing is located on the other of the opposite sides of the drive casing in the horizontal direction, while the other of the first electrical casing and the second electrical casing is located on the upper side of the drive casing in the vertical direction. These arrangements make it easier for the mechanical-electrical integrated unit to be appropriately installed in the hybrid electric vehicle. Further, since the oil cooler provided in the one of the first electrical casing and the second electrical casing is located on one of the opposite sides of the electric motor in the direction of the axis of the electric motor, thereby making it possible to simplify the cooling structure of the electric motor.

In the hybrid electric vehicle according to the fourth aspect of the invention, the first electrical equipment includes the inverter that is configured to convert the DC power supplied from the high-voltage battery, into the AC power that is to be supplied to the electric motor, and the second electrical equipment includes the DC-DC converter that is configured to lower the voltage of the high-voltage battery and to charge the low-voltage battery. Owing to these arrangements, the inverter and the DC-DC converter can be appropriately cooled by the simple cooling structure. In addition, the inverter and the DC-DC converter are disposed separately, so that the electric motor and the inverter can be easily connected to each other, and maintenance performance of the DC-DC converter can be improved.

In the hybrid electric vehicle according to the fifth aspect of the invention, the second electrical equipment further include the reactor included in the boost converter that is configured to boost the DC power supplied from the high-voltage battery and to supply the boosted DC power to the inverter. Owing to these arrangements, the reactor can be appropriately cooled by the simple cooling structure. In addition, the inverter and the reactor are disposed separately, so that maintenance performance of the reactor can be improved.

### BRIEF DESCRIPTION OF THE DRAWINGS

FIG 1 is a view showing, by way of example, a construction of an electric vehicle to which the present invention is applied, wherein the electric vehicle is constructed according to a first embodiment of the present invention;
FIG2 is a view showing, by way of example, an electrical configuration for controlling first and second electric motors in the electric vehicle shown in FIG 1;
FIG3 is a view showing, by way of example, a construction of a mechanical-electrical integrated unit in the electric vehicle shown in FIG 1;
FIG4 is another view showing, by way of example, the construction of the mechanical-electrical integrated unit;
FIG.5 is a view showing, by way of examples, positions of respective components of the mechanical-electrical integrated unit;
FIG6 is a view showing, by way of examples, positions of respective casings of the mechanical-electrical integrated unit;
FIG7 is a view showing, by way of examples, cooler water-cooling passages;
FIG8 is a view showing, by way of example, a construction of an electric vehicle to which the present invention is applied, wherein the electric vehicle is constructed according to a second embodiment of the present invention;
FIG9 is a view showing, by way of example, an electrical configuration for controlling an electric motor in the hybrid electric vehicle shown in FIG8;
FIG 10 is a view showing, by way of examples, positions of respective casings of a mechanical-electrical integrated unit in the hybrid electric vehicle shown in FIG8; and
FIG 11 is a view showing, by way of example, a construction of a hybrid electric vehicle to which the present invention is applied, wherein the hybrid electric vehicle is constructed according to a third embodiment of the present invention.

### DETAILED DESCRIPTION OF PREFERRED EMBODIMENTS

In embodiments of the present invention, the mechanical-electrical integrated unit is, in a broad sense, a casing housing the drive apparatus including the electric motor and the power transmission device, and a casing housing the electric power control device are integrated into the casing, i.e., arranged in close proximity. For example, the mechanical-electrical integrated unit may have a configuration in which the casing of the electric power control device and the casing of the drive apparatus are fixed to each other through bolts or brackets, or the electric power control device is housed in the casing of the drive apparatus. Specifically, the mechanical-electrical integrated unit may have a configuration in which the casing housing the electric power control device and the casing housing the drive apparatus are separated from each other, and the casings are fastened to each other through brackets or bolts. Alternatively, the mechanical-electrical integrated unit may have a configuration in which the casing housing the electric motor also houses the electric power control device, or the casing housing the electric motor and the power transmission device also houses electric power control device.

Hereinafter, embodiments of the invention will be described in detail with reference to the accompanying drawings.

### FIRST EMBODIMENT

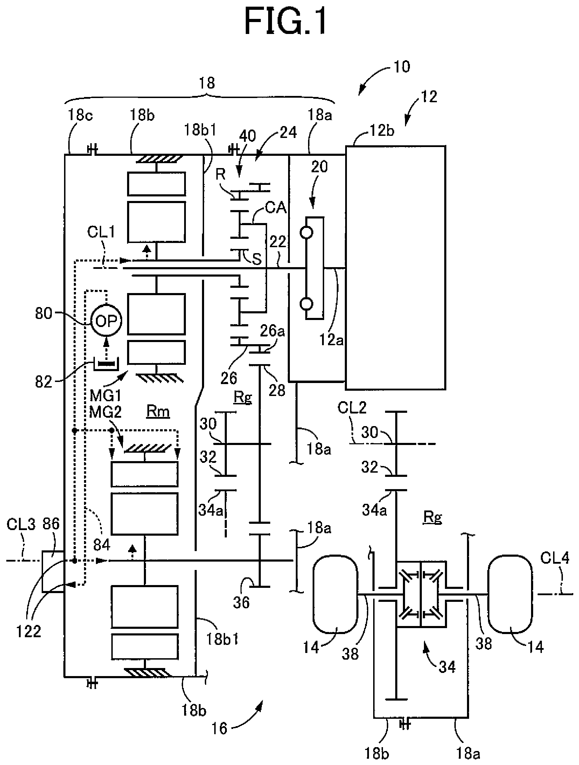

FIG 1 is a view showing, by way of example, a construction of a hybrid electric vehicle 10 to which the present invention is applied, wherein the electric vehicle 10 is constructed according to a first embodiment of the present invention. As shown in FIG 1, the electric vehicle 10 is a hybrid electric vehicle including an engine 12, a first electric motor MG1 and a second electric motor MG2. The electric vehicle 10 (hereinafter simply referred to as "vehicle 10") includes drive wheels 14 and a power transmission device 16.

The engine 12 is a known internal combustion engine. The power transmission device 16 is provided in a power transmission path between the engine 12 and the drive wheels 14 and a power transmission path between the second electric motor MG2 and the drive wheels 14. The engine 12 is a power source that is connected to the power transmission device 16 in a power transmittable manner. The second electric motor MG2 is an electric motor functioning as another power source.

The first electric motor MG1 and the second electric motor MG2 are known rotary electric machines, so-called motor generators, each having a function as a motor that generates a mechanical power from an electric power and a function as a power generator that generates an electric power from a mechanical power. The first electric motor MG1 and the second electric motor MG2 are provided in a non-rotatable casing 18 which is a non-rotatable member attached to a body of the vehicle 10.

The power transmission device 16 includes a damper 20, an input shaft 22, a transmission portion 24, a composite gear 26, a driven gear 28, a driven shaft 30, a final gear 32, a differential gear device 34 and a reduction gear 36 that are housed in the casing 18. The power transmission device 16 includes a pair of drive shafts 38 connected to the differential gear device 34.

The damper 20 is connected to a crankshaft 12a of the engine 12. The input shaft 22 functions as an input rotary member of the transmission portion 24. The input shaft 22 is connected to the damper 20, and is connected to the crankshaft 12a via the damper 20 and the like. The transmission portion 24 is connected to the input shaft 22. The composite gear 26 is a rotary body on an output side of the transmission portion 24. The composite gear 26 has a drive gear 26a formed on a part of an outer peripheral surface thereof. The drive gear 26a is an output-side rotary member of the transmission portion 24. The driven gear 28 meshes with the drive gear 26a. The driven gear 28 and the final gear 32 are fixed onto the driven shaft 30 so as not to be relatively rotatable. The final gear 32 has a smaller diameter than the driven gear 28 and meshes with a differential ring gear 34a of the differential gear device 34. The reduction gear 36 has a smaller diameter than the driven gear 28 and meshes with the driven gear 28. A rotor shaft of the second electric motor MG2 is connected to the reduction gear 36, so that the second electric motor MG2 is connected to the reduction gear 36 in a power transmittable manner.

The power transmission device 16 constructed as described above is suitably used for a vehicle of a front engine front drive (FF) type or a rear engine rear drive (RR) type. The power transmission device 16 transmits a power outputted from the engine 12 to the driven gear 28 via the transmission portion 24. The power transmission device 16 transmits a power outputted from the second electric motor MG2 to the driven gear 28 via the reduction gear 36. The power transmission device 16 transmits the power transmitted to the driven gear 28 to the drive wheels 14 sequentially via the driven shaft 30, the final gear 32, the differential gear device 34, the drive shafts 38 and the like. The driven gear 28, the driven shaft 30, and the final gear 32 constitute a transmission mechanism that transmits the power from the second electric motor MG2 to the drive gear 26a. The differential gear device 34 distributes the power from the engine 12 and the second electric motor MG2 to the drive wheels 14. The drive shafts 38 transmit the power from the differential gear device 34 to the drive wheels 14. The second electric motor MG2 is connected to the drive wheels 14 in a power transmittable manner.

The transmission portion 24 includes the first electric motor MG1 and a differential mechanism 40. The differential mechanism 40 is a known single-pinion planetary gear device including a sun gear S, a carrier CA and a ring gear R. The sun gear S is connected to the rotor shaft of the first electric motor MG1, so that the first electric motor MG1 is connected to the sun gear S in a power transmittable manner. The carrier CA is connected to the input shaft 22, such that the engine 12 is connected to the carrier CA via the input shaft 22 and the like in a power transmittable manner. The ring gear R is formed on a part of an inner peripheral surface of the composite gear 26, and is integrally connected to the drive gear 26a.

The differential mechanism 40 functions as a differential mechanism which is connected to the engine 12 in a power transmittable manner and which generates a differential action. The first electric motor MG1 is an electric motor that is connected to the differential mechanism 40 in a power transmittable manner. The differential mechanism 40 is a power split mechanism that mechanically splits the power of the engine 12 (that is inputted to the carrier CA) to the first electric motor MG1 and the drive gear 26a. The transmission portion 24 is a known electric transmission mechanism in which a differential state of the differential mechanism 40 is controlled with an operation state of the first electric motor MG1 being controlled.

The power transmission device 16 has a first axis CL1, a second axis CL2, a third axis CL3 and a fourth axis CL4. These four axes CL1, CL2, CL3, CL4 are parallel to one another. The first axis CL1 is an axis of each of the input shaft 22 and the rotor shaft of the first electric motor MG1, and is a rotation axis of each of the transmission portion 24 and the first electric motor MG1. The second axis CL2 is an axis of the driven shaft 30, and is a rotation axis of each of the driven gear 28 and the final gear 32. The third axis CL3 is an axis of a rotor shaft of the second electric motor MG2, and is a rotation axis of each of the reduction gear 36 and the second electric motor MG2. The fourth axis CL4 is an axis of each of the drive shafts 38, and is a rotation axis of the differential gear device 34.

The casing 18 includes a housing 18a, a main body 18b and a cover 18c. The housing 18a includes an opening portion on a side of the engine 12. The engine 12 includes an engine block 12b that is connected to the opening portion of the housing 18a. The housing 18a includes another opening portion that is remote from the engine 12. The housing 18a and the main body 18b are integrally connected by fasteners such as bolts such that the another opening portion of the housing 18a and an opening portion of the main body 18b, which are opposed to each other, are aligned with each other. The main body 18b and the cover 18c are integrally connected by fasteners such as bolts such that the cover 18c closes another opening portion of the main body 18b that is remote from the engine 12.

The main body 18b is a casing including a partition wall 18b1 that separates a gear room Rg and a motor room Rm from each other, wherein the gear room Rg houses the driven gear 28, the deferential gear device 34, the differential mechanism 40 and the like, while the motor room Rm houses the first electric motor MG1 and the second electric motor MG2. The main body 18b cooperates with the housing 18a to form the gear room Rg. The main body 18b cooperates with the partition wall 18b1 and the cover 18c to form the motor room Rm that is located between the partition wall 18b1 and the cover 18c.

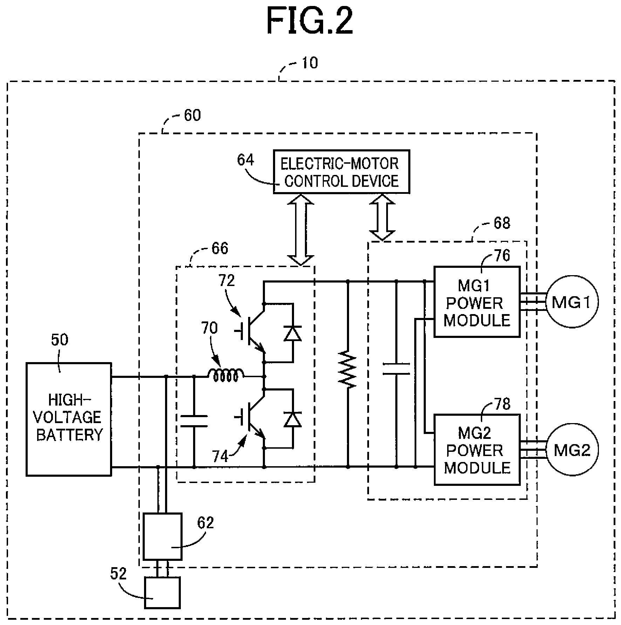

FIG 2 is a view showing, by way of example, an electrical configuration related to control of the first and second electric motors MG1, MG2, for example. As shown in FIG 2, the vehicle 10 further includes a high-voltage battery 50, an auxiliary battery 52 and an electric-power control unit 60.

The high-voltage battery 50 is a chargeable and dischargeable DC power supply, and is a secondary battery such as a nickel-hydrogen secondary battery or a lithium ion battery. The high-voltage battery 50 is connected to the electric-power control unit 60. The stored electric power is supplied from the high-voltage battery 50 to, for example, the second electric motor MG2 via the electric-power control unit 60. The high-voltage battery 50 is supplied with the electric power generated by the first electric motor MG1 and the electric power regenerated by the second electric motor MG2 via the electric-power control unit 60. The high-voltage battery 50 is a driving battery.

The electric-power control unit 60 includes a DC-DC converter 62, an electric-motor control device 64, a boost converter 66 and an inverter 68. The electric-power control unit 60 is an electric-power control apparatus that controls the electric power transmitted and received between the high-voltage battery 50 and each of the first electric motor MG1 and the second electric motor MG2.

The DC-DC converter 62 is connected to the high-voltage battery 50. The DC-DC converter 62 functions as a charging device that reduces a voltage of the high-voltage battery 50 to a voltage equivalent to a voltage of the auxiliary battery 52, and charges the auxiliary battery 52. The auxiliary battery 52 is a low-voltage battery that supplies the electric power for operating auxiliary devices, the electric-motor control device 64 and the like, which are provided in the vehicle 10.

The boost converter 66 includes a reactor 70 and two switching elements 72, 74. The boost converter 66 is a step-up/down circuit having a function of boosting the voltage of the high-voltage battery 50 and supplying the boosted voltage to the inverter 68, and a function of reducing the voltage converted into a direct current by the inverter 68 and supplying the reduced voltage to the high-voltage battery 50. Thus, the boost converter 66 boosts the DC power from the high-voltage battery 50 and supplies the boosted power to the inverter 68.

The inverter 68 includes an MG1 power module 76 and an MG2 power module 78. Each of the MG1 power module 76 and the MG2 power module 78 includes switching elements that are similar to the switching elements 72, 74. The inverter 68 converts the DC current supplied from the boost converter 66, into the AC current for driving the first electric motor MG1 and the second electric motor MG2. Thus, the inverter 68 converts the DC power supplied from the high-voltage battery 50 and boosted by the boost converter 66, into the AC power, and then supplies the AC power to the first electric motor MG1 and the second electric motor MG2. The inverter 68 converts the AC current that is generated in the first electric motor MG1 by the power of the engine 12 and the AC current that is generated in the second electric motor MG2 by regenerative braking, into the DC current. The inverter 68 supplies the AC current generated in the first electric motor MG1, to supply as a driving electric power for driving the second electric motor MG2, depending on a running state of the vehicle 10.

The electric-motor control device 64 controls the boost converter 66 and the inverter 68, and controls the first electric motor MG1 and the second electric motor MG2. For example, the electric-motor control device 64 converts the DC current supplied from the high-voltage battery 50, into the AC current used for the first electric motor MG1 and the second electric motor MG2. The electric-motor control device 64 drives the first electric motor MG1, for supplying the electric power to the second electric motor MG2 and for obtaining the electric power required to charge the high-voltage battery 50. The electric-motor control device 64 drives the second electric motor MG2 based on a power demand value corresponding to a torque demanded by a driver of the vehicle 10. The electric-motor control device 64 causes the second electric motor MG2 to function as the power generator in accordance with the required amount of regenerative braking.

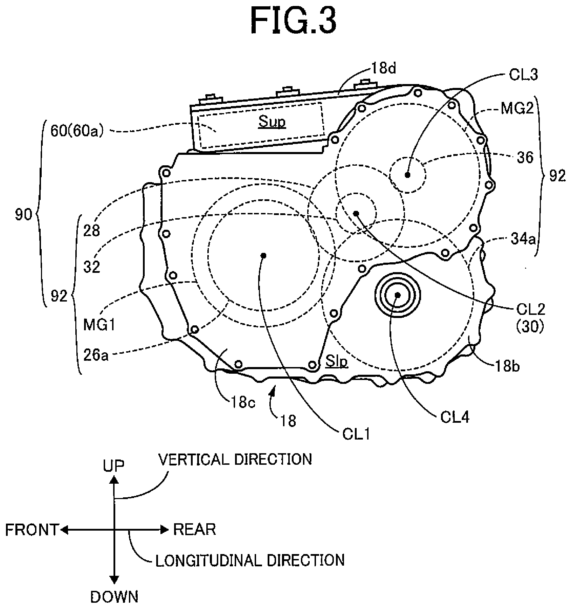

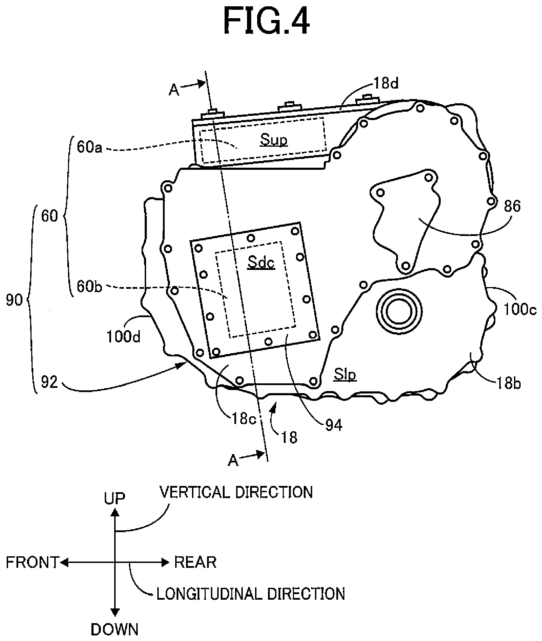

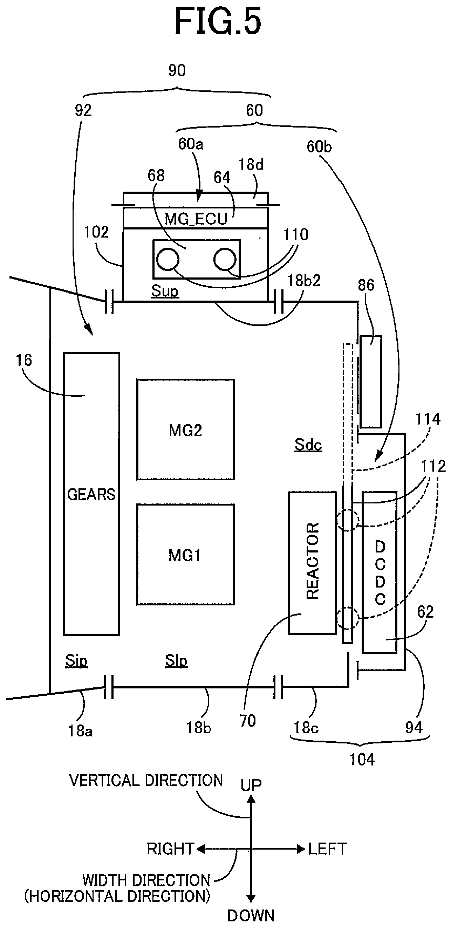

FIGS.3, 4 and 5 are view for explaining an example of a construction of a mechanical-electrical integrated unit 90. FIGS.3 and 4 are views as seen from a left side of the vehicle 10. FIG5 is a cross-sectional view taken in line A-A in FIG4, as seen from a front side of the vehicle 10, schematically showing positions of respective components of the mechanical-electrical integrated unit 90. It is noted that "VERTICAL DIRECTION", "LONGITUDINAL DIRECTION" and "WIDTH DIRECTION" in the drawings indicate directions in the vehicle 10. The "WIDTH DIRECTION" is a horizontal direction parallel to an axial direction corresponding to each of the first axis CL1, the second axis CL2, the third axis CL3 and the fourth axis CL4. The left and right in the "WIDTH DIRECTION" are left and right in relation to the "LONGITUDINAL DIRECTION".

As shown in FIGS.3, 4 and 5, the mechanical-electrical integrated unit 90 is constituted by a drive apparatus 92 and the electric-power control unit 60 that are integrally arranged. The drive apparatus 92 is a transaxle that includes the power transmission device 16 (26a, 28, 32, 34a, 36, etc.), the first electric motor MG1 and the second electric motor MG2, wherein the power transmission device 16 includes the drive gear 26a, the driven gear 28, the final gear 32, the differential ring gear 34a and the reduction gear 36. The electric-power control unit 60 is sectioned into first electrical equipment 60a and second electrical equipment 60b. The first electrical equipment 60a includes the electric-motor control device 64 (see "MG_ECU" in FIG 5) and the inverter 68, for example. The second electrical equipment 60b includes the DC-DC converter 62 and the reactor 70, for example.

The casing 18 further includes a protection plate 18d in addition to the above-described housing 18a, main body 18b and cover 18c. The main body 18b includes a bottom wall and side walls that extend upward in the vertical direction from an outer peripheral edge of the bottom wall on front and rear sides in the longitudinal direction of the vehicle 10, and opens in its upper portion in the vertical direction of the vehicle 10. The protection plate 18d is a plate-shaped member that closes an opening in the upper portion of the main body 18b. The main body 18b has a partition wall 18b2 (see FIGS), such that an inner space of the main body 18b is divided into two spaces by the partition wall 18b2, wherein the two spaces are a lower space Slp as a lower portion of the inner space of the main body 18b in the vertical direction and an upper space Sup as an upper portion of the inner space of the main body 18b in the vertical direction.

The vehicle 10 is provided with a DC-DC plate 94 to which the second electrical equipment 60b is fixed. The DC-DC plate 94 is attached to an opening of the cover 18c, which is opposite to the main body 18b, so that a DC-DC space Sdc is defined in the cover 18c.

When being installed in the vehicle 10, the drive apparatus 92 is housed in the lower space Slp of the main body 18b and the inner space Sip of the housing 18a. When being installed in the vehicle 10, the first electrical equipment 60a is housed in the upper space Sup of the main body 18b. When being installed in the vehicle 10, the second electrical equipment 60b is housed in the DC-DC space Sdc of the cover 18c. In the example shown in FIG.5, the DC-DC converter 62 and the reactor 70 are arranged side by side in the width direction of the vehicle 10 in the DC-DC space Sdc of the cover 18c, such that the DC-DC converter 62 is located on a left side of the reactor 70 in the width direction. However, this arrangement is not essential. For example, DC-DC converter 62 may be located on a right side of the reactor 70 in the width direction. Further, the DC-DC converter 62 and the reactor 70 may be arranged side by side in either the longitudinal direction or the vertical direction of the vehicle 10.

Referring to FIG 3, the drive apparatus 92 is disposed such that the first axis CL1, the second axis CL2, the third axis CL3 and the fourth axis CL4 are parallel to a horizonal direction perpendicular to the longitudinal direction of the vehicle 10. Further, the first axis CL1, the second axis CL2, the third axis CL3 and the fourth axis CL4 are located relative to one another, such that the second electric motor MG2, the driven shaft 30, the first electric motor MG1 and the differential gear device 34 are arranged in this order of description from above to below in the vertical direction, and such that the first electric motor MG1, the driven shaft 30, the differential gear device 34 and the second electric motor MG2 are arranged in this order of description from front to rear in the longitudinal direction. Thus, a vertical size of the drive apparatus 92 in the vertical direction is reduced while distances among the first axis CL1, the second axis CL2, the third axis CL3 and the fourth axis CL4 are appropriately ensured. Therefore, the upper space Sup is created in an upper portion of the drive apparatus 92 in the vertical direction of the vehicle 10.

The first electrical equipment 60a, which is a part of the electric-power control unit 60, is disposed in a space created by reduction of the vertical size of the drive apparatus 92. The second electrical equipment 60b, which is another part of the electric-power control unit 60, is disposed in the DC-DC space Sdc that is located on one of opposite sides of the drive apparatus 92 that are opposite to each other in the horizontal direction. Since the electric-power control unit 60 is divided into the first electrical equipment 60a and the second electrical equipment 60b, a vertical size of the mechanical-electrical integrated unit 90 in the vertical direction is reduced.

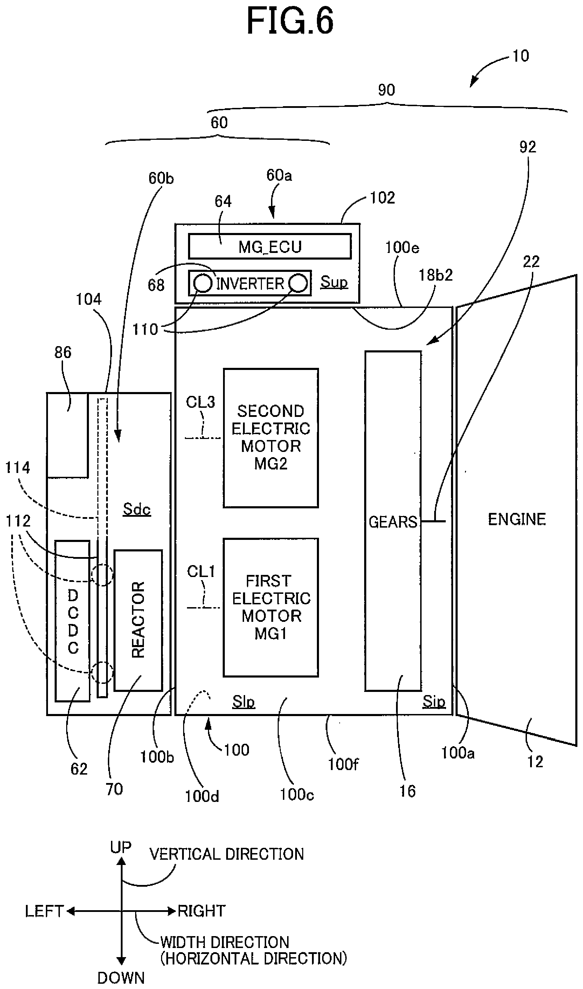

FIG6 is a view showing, by way of examples, positions of the respective casings of the mechanical-electrical integrated unit 90, as seen from a rear side of the vehicle 10. As seen in FIG6, the vehicle 10 includes a drive casing 100, a first electrical casing 102 and a second electrical casing 104.

The drive casing 100 is a casing having a space that houses the drive apparatus 92, namely, a casing having the lower space Slp of the main body 18b and the inner space Sip of the housing 18a. The first electrical casing 102 is a casing having a space that houses the first electrical equipment 60a, namely, a casing having the upper space Sup of the main body 18b. The second electrical casing 104 is a casing having a space that houses the second electrical equipment 60b, namely, a casing having the DC-DC space Sdc of the cover 18c. The mechanical-electrical integrated unit 90 is a unit in which the drive casing 100, the first electrical casing 102 and the second electrical casing 104 are integrally arranged. The casing 18 can be regarded to be constituted by the drive casing 100, the first electrical casing 102 and the second electrical casing 104 that are integrally arranged.

The drive casing 100 has a first wall surface 100a, a second wall surface 100b, a third wall surface 100c, a fourth wall surface 100d (see FIG4), a fifth wall surface 100e and a sixth wall surface 100f that cooperate to define a space that houses the drive apparatus 92. The first wall surface 100a is a right-side wall surface in the width direction of the vehicle 10, and is a wall surface of the housing 18a on which the engine 12 is disposed. The engine 12 is connected to the input shaft 22 on a side of the first wall surface 100a. The second wall surface 100b is a left-side wall surface in the width direction of the vehicle 10, and is a wall surface of the main body 18b to which the cover 18c is connected. The second wall surface 100b is a wall surface opposed to the first wall surface 100a. The third wall surface 100c is a rear-side wall surface in the longitudinal direction of the vehicle 10. The fourth wall surface 100d is a front-side wall surface (see FIG4) in the longitudinal direction of the vehicle 10. The fourth wall surface 100d is a wall surface opposed to the third wall surface 100c. The fifth wall surface 100e is an upper-side wall surface in the vertical direction of the vehicle 10. The fifth wall surface 100e is a wall surface corresponding to the partition wall 18b2 (see FIGS). The sixth wall surface 100f is a lower-side wall surface in the vertical direction of the vehicle 10. The sixth wall surface 100f is a wall surface corresponding to bottom walls of the main body 18b and the housing 18a and opposed to the fifth wall surface 100e.

The engine 12 is disposed on the first wall surface 100a. That is, when being installed in the vehicle 10, the engine 12 is located on one of opposite sides of the drive casing 100 that are opposite to each other in the horizonal direction. When being installed in the vehicle 10, the engine 12 is disposed on one of the first wall surface 100a, the second wall surface 100b, the third wall surface 100c, the fourth wall surface 100d, the fifth wall surface 100e and the sixth wall surface 100f, which is opposed to the engine 12 in a direction of the first axis CL1 or third axis CL3.

The first electrical casing 102 and the second electrical casing 104 are separately disposed on respective two of the first wall surface 100a, the second wall surface 100b, the third wall surface 100c, the fourth wall surface 100d, the fifth wall surface 100e and the sixth wall surface 100f. However, in the present embodiment in which the engine 12 is disposed on the first wall surface 100a, the first electrical casing 102 and the second electrical casing 104 are separately disposed on respective two of five wall surfaces excluding the first wall surface 100a. For example, the first electrical casing 102 is disposed on the fifth wall surface 100e. That is, when being installed in the vehicle 10, the first electrical casing 102 is located on an upper side of the drive casing 100 in the vertical direction of the vehicle 10. Further, the second electrical casing 104 is disposed on the second wall surface 100b. That is, when being installed in the vehicle 10, the second electrical casing 104 is located adjacent to the drive casing 100 and on one of both sides of the drive casing 100 that is remote from the engine 12. Thus, when being installed in the vehicle 10, the second electrical casing 104 is arranged horizontally with respect to the drive casing 100 in the direction of the first axis CL1 or the third axis CL3.

In in vehicle 10, the first electric motor MG1 and the second electric motor MG2 are cooled by circulating an oil FLD. The oil FLD is an oil used to cool the first electric motor MG1 and the second electric motor MG2.

As shown in FIG 1, the vehicle 10 further includes an electric oil pump 80, an oil storage portion 82 and a cooling oil passage 84 that are provided in the casing 18.

The oil storage portion 82 is an oil reservoir provided, for example, in a bottom portion of the gear room Rg in which the oil FLD is stored. The electric oil pump 80 is driven based on a command from an electronic control apparatus (not shown), to suck in the oil FLD from the oil storage portion 82, and to discharge the oil FLD to the cooling oil passage 84. The cooling oil passage 84 is an oil passage for supplying the oil FLD discharged from the electric oil pump 80 to the first electric motor MG1 and the second electric motor MG2 so as to cool the first electric motor MG1 and the second electric motor MG2.

In order to cool the first electric motor MG1 and the second electric motor MG2, it is necessary to cool the oil FLD. The vehicle 10 further includes a water-cooling oil cooler 86 attached to an outer surface of the cover 18c of the casing 18, for example (see FIGS. 4 and 5). That is, the oil cooler 86 is provided in the second electrical casing 104 (see FIG 6). The oil cooler 86 is a water-cooling heat exchanger configured to cool the oil FLD.

In the cooling oil passage 84, the oil FLD that has passed through the oil cooler 86 is supplied to the first electric motor MG1 and the second electric motor MG2. For example, the cooling oil passage 84 supplies the oil FLD to the first electric motor MG1 via a rotor shaft of the first electric motor MG1. The cooling oil passage 84 supplies the oil FLD to the second electric motor MG2 via an oil passage which is provided adjacent to and on an upper side of the second electric motor MG2 in the vertical direction of the vehicle 10 and which extends in the width direction of the vehicle 10. For example, the cooling oil passage 84 supplies the oil FLD to the second electric motor MG2 via a rotor shaft of the second electric motor MG2. In the vehicle 10, the first electric motor MG1 employs a shaft cooling, and the second electric motor MG2 employs both a top cooling and the shaft cooling. It is noted that the first electric motor MG1 may employ the top cooling, and the second electric motor MG2 may employ only one of the top cooling and the shaft cooling.

In the vehicle 10, the first electrical equipment 60a, the second electrical equipment 60b and the oil cooler 86 are cooled by circulating a refrigerant, for example, water-cooling, through a radiator (not shown) using an electric pump (not shown). The cooling of the oil cooler 86 is synonymous with the cooling of the oil FLD.

By the way, where the first electrical equipment 60a, the second electrical equipment 60b and the oil cooler 86 are cooled independently of one another, a total of three water-cooling passages would be required. In this case, the cooling structure could be complicated. On the other hand, in the cooling structure provided in the vehicle 10, two of the three water-cooling passages are integrated to provide a total of two water-cooling passages.

As shown in FIGS.5 and 6, the vehicle 10 further includes first water-cooling passages 110, second water-cooling passages 112 and cooler water-cooling passages 114. Each of the first water-cooling passages 110 is a water-cooling passage provided in the first electrical casing 102 for cooling the first electrical equipment 60a. Each of the first water-cooling passages 110 extends in the longitudinal direction of the vehicle 10. Each of the second water-cooling passages 112 is a water-cooling passage provided in the second electrical casing 104 for cooling the second electrical equipment 60b.

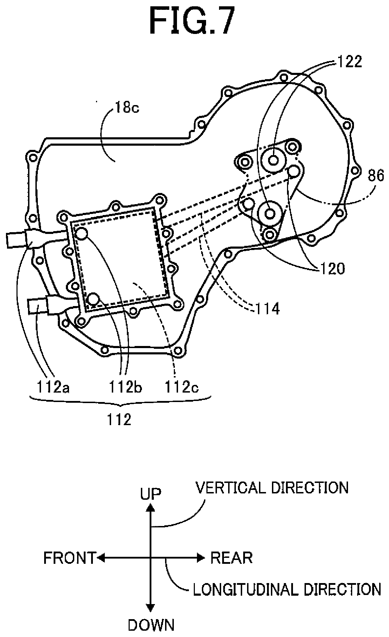

FIG7 is a view showing, by way of examples, the cooler water-cooling passages 114. Each of the cooler water-cooling passages 114 is a water-cooling passage for cooling the oil cooler 86. As shown in FIG7, each of the second water-cooling passages 112 includes a connection portion 112a, a cooling-water relay hole 112b and a cooling portion 112c. The connection portion 112a is a water passage which protrudes from the cover 18c toward the front side of the vehicle 10 and which is connected to a water pipe (not shown) provided outside the casing 18. The cooling-water relay hole 112b is a hole that is in communication with the connection portion 112a, such that the cooling water is to be transferred between the connection portion 112a and the cooling portion 112c through the cooling-water relay hole 112b. The cooling portion 112c is a water passage that is defined by the DC-DC plate 94 attached to the cover 18c.

The second electrical casing 104, i.e., the cover 18c is provided with the cooler water-cooling passages 114, cooling-water delivery ports 120 and oil delivery ports 122. The cooler water-cooling passages 114 are in communication with the cooling portion 112c of the second water-cooling passages 112 on a side of the second electrical equipment 60b (see FIGS.5 and 6), and are in communication with the cooling-water delivery ports 120 on a side of the oil cooler 86. The cooling-water delivery ports 120 are holes that are in communication with the cooler water-cooling passages 114, such that the cooling water is to be transferred between the cooler water-cooling passages 114 and the oil cooler 86 through the cooling-water delivery ports 120. The oil delivery ports 122 are holes that are in communication with the cooling oil passage 84, such that the oil FLD is to be transferred between the cooling oil passage 84 and the oil cooler 86 through the oil delivery ports 122 (see FIG 1).

As described above, in the present embodiment, the first electrical casing 102 and the second electrical casing 104 are separately disposed on respective two of the first wall surface 100a, the second wall surface 100b, the third wall surface 100c, the fourth wall surface 100d, the fifth wall surface 100e and the sixth wall surface 100f. Thus, the first electrical casing 102 and the second electrical casing 104 are located separately, making it easier for the mechanical-electrical integrated unit 90 to be installed in the vehicle 100. In other words, the mechanical-electrical integrated unit 90 can be made smaller in size. The oil cooler 86 is provided in the second electrical casing 104, and the second electrical casing 104 is provided with the cooler water-cooling passage 114 for cooling the oil cooler 86, such that the cooler water-cooling passage 114 is in communication with the second water-cooling passage 112 that is provided in the second electrical casing 104. Thus, the cooler water-cooling passage 114 is integrated with the second water-cooling passage 112, thereby resulting in a total of two water passages for cooling. In other words, it is possible to eliminate a water pipe or water passage dedicated exclusively to the oil cooler 86. Thus, the cooling structure can be simplified while increasing the degree of freedom of installation of the mechanical-electrical integrated unit 90.

In the present embodiment, the second electrical casing 104 is located on one of the opposite sides of the drive casing 100 which are opposite to each other in the horizontal direction and in the direction of the first axis CL1 or the third axis CL3, while the first electrical casing 102 is located on the upper side of the drive casing 100 in the vertical direction. These arrangements make it easier for the mechanical-electrical integrated unit 90 to be appropriately installed in the vehicle 10. Further, since the oil cooler 86 provided in the second electrical casing 104 is located on one of the opposite sides of the electric motor MG1 or electric motor MG2 in the direction of the first axis CL1 or third axis CL3, thereby making it possible to simplify the cooling structure of the electric motor MG1 or electric motor MG2.

In the present embodiment, the engine 12 is located on one of the opposite sides of the drive casing 100 which are opposite to each other in the horizontal direction, and is disposed on one of the six wall surfaces, which is opposed to the engine 12 in the direction of the first axis CL1 or third axis CL3. Further, the second electrical casing 104 is located on the other of the opposite sides of the drive casing 100 in the horizontal direction, while the first electrical casing 102 is located on the upper side of the drive casing 100 in the vertical direction. These arrangements make it easier for the mechanical-electrical integrated unit 90 to be appropriately installed in the vehicle 10. Further, since the oil cooler 86 provided in the second electrical casing 104 is located on one of the opposite sides of the electric motor MG1 or electric motor MG2 in the direction of the first axis CL1 or third axis CL3, thereby making it possible to simplify the cooling structure of the electric motor MG1 or electric motor MG2.

In the present embodiment, the first electrical equipment 60a includes the inverter 68, and the second electrical equipment 60b includes the DC-DC converter 62. Owing to these arrangements, the inverter 68 and the DC-DC converter 62 can be appropriately cooled by the simple cooling structure. In addition, the inverter 68 and the DC-DC converter 62 are disposed separately, so that each of the first and second electric motors MG1, MG2 and the inverter 68 can be easily connected to each other, and maintenance performance of the DC-DC converter 62 can be improved.

In the present embodiment, the second electrical equipment 60b further include the reactor 70. Thus, the reactor 70 can be appropriately cooled by the simple cooling structure. In addition, the inverter 68 and the reactor 70 are disposed separately, so that maintenance performance of the reactor 70 can be improved.

There will be described other embodiments of this invention. The same reference signs as used in the above-described first embodiment will be used in the following embodiments, to identify the functionally corresponding elements, and descriptions thereof are not provided.

### SECOND EMBODIMENT

In the above-described first embodiment, the electric vehicle 10 is a hybrid electric vehicle provided with the engine 12, the first electric motor MG1 and the second electric motor MG2. In this second embodiment, there will be described an electric vehicle 200 as an example of the electric vehicle, wherein the electric vehicle 200 (hereinafter simply referred to as "vehicle 200") is provided with an electric motor MG

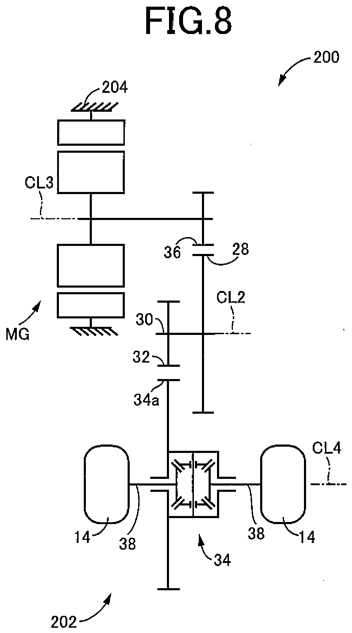

FIG8 is a view showing, by way of example, a construction of the vehicle 200 to which the present invention is applied. As shown in FIG8, the vehicle 200 is the electric vehicle provided with the electric motor MG The vehicle 200 is different from the vehicle 10 of the above-described first embodiment mainly in that the vehicle 200 is not provided with the transmission portion 24 including the engine 12 and first electric motor MG1. Further, the electric motor MG of the vehicle 200 corresponds to the second electric motor MG2 of the vehicle 10. Like the vehicle 10, the vehicle 200 is provided with a power transmission device 202 to which the electric motor MG is connected in a power transmittable manner. The electric motor MG is the power source (e.g., main power source). The electric motor MG and the power transmission device 202 are provided in a casing 204.

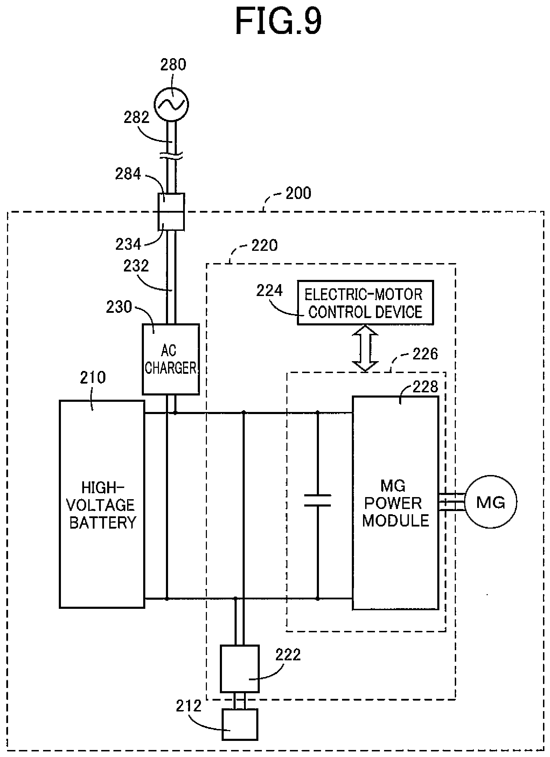

FIG9 is a view showing, by way of example, an electrical configuration for controlling the electric motor MG As shown in FIG9, the vehicle 200 further includes a high-voltage battery 210, an auxiliary battery 212, an electric-power control unit 220, an AC charger 230, an in-vehicle charging cable 232 and a charging inlet 234.

The high-voltage battery 210 is a chargeable and dischargeable DC power supply, and is connected to the electric-power control unit 220 and the AC charger 230.

The AC charger 230 is connected to the charging inlet 234 via the in-vehicle charging cable 232. The charging inlet 234 is provided in a body of the vehicle 200, such that the charging inlet 234 is connectable with a charging connector 284 of an external charging cable 282 that is connected to an external power source 280 as an external power source of the vehicle 200. The AC charger 230 is a charger that is configured to charge the high-voltage battery 210 with the electric power supplied from the external power source 280.

The electric-power control unit 220 includes a DC-DC converter 222, an electric-motor control device 224 and an inverter 226. The electric-power control unit 220 is an electric-power control apparatus that controls the electric power transmitted and received between the high-voltage battery 210 and the electric motor MG

The DC-DC converter 222 is connected to the high-voltage battery 210. The DC-DC converter 222 functions as a charging device that reduces a voltage of the high-voltage battery 210 to a voltage equivalent to a voltage of the auxiliary battery 212, and charges the auxiliary battery 212. The auxiliary battery 212 is a low-voltage battery that supplies the electric power for operating auxiliary devices, the electric-motor control device 224 and the like, which are provided in the vehicle 200.

The inverter 226 includes an MG power module 228 that includes switching elements. The inverter 226 converts the DC power supplied from the high-voltage battery 210, into the AC power, and then supplies the AC power to the electric motor MG The inverter 226 converts the AC current that is generated in the electric motor MG by regenerative braking, into the DC current. The electric-motor control device 224 controls the electric motor MG by controlling the inverter 226.

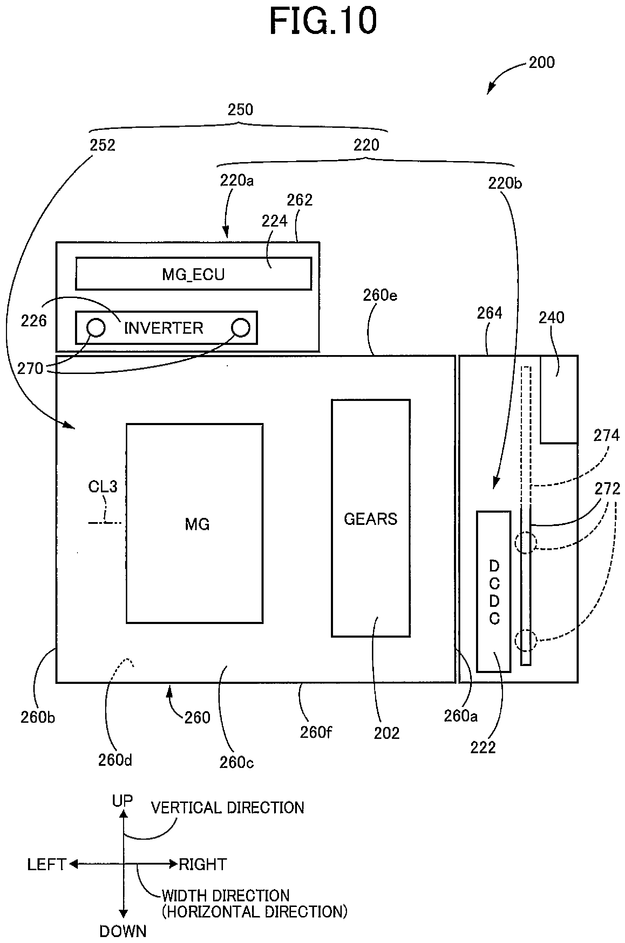

FIG 10 is a view showing, by way of examples, positions of the respective casings of a mechanical-electrical integrated unit 250, as seen from a rear side of the vehicle 200. As seen in FIG 10, the mechanical-electrical integrated unit 250 is constituted by a drive apparatus 252 and the electric-power control unit 220 that are integrally arranged. The drive apparatus 252 is a transaxle that includes the power transmission device 202 (28, 32, 34a, 36 etc.) and the electric motor MG, wherein the power transmission device 202 includes the driven gear 28, the final gear 32, the differential ring gear 34a and the reduction gear 36. The electric-power control unit 220 is sectioned into first electrical equipment 220a and second electrical equipment 220b. The first electrical equipment 220a includes the electric-motor control device 224 (see "MG_ECU" in FIG 10) and the inverter 226, for example. The second electrical equipment 220b includes the DC-DC converter 222, for example.

The vehicle 200 includes a drive casing 260, a first electrical casing 262 and a second electrical casing 264. The drive casing 260 is a casing having a space that houses the drive apparatus 252. The first electrical casing 262 is a casing having a space that houses the first electrical equipment 220a. The second electrical casing 264 is a casing having a space that houses the second electrical equipment 220b. The mechanical-electrical integrated unit 250 is a unit in which the drive casing 260, the first electrical casing 262 and the second electrical casing 264 are integrally arranged. The casing 204 can be regarded to be constituted by the drive casing 260, the first electrical casing 262 and the second electrical casing 264 that are integrally arranged.

The drive casing 260 has a first wall surface 260a, a second wall surface 260b, a third wall surface 260c, a fourth wall surface 260d, a fifth wall surface 260e and a sixth wall surface 260f that cooperate to define a space that houses the drive apparatus 252. The first wall surface 260a is a right-side wall surface in the width direction of the vehicle 200. The second wall surface 260b is a left-side wall surface in the width direction of the vehicle 200, and is a wall surface opposed to the first wall surface 260a. The third wall surface 260c is a rear-side wall surface in the longitudinal direction of the vehicle 200. The fourth wall surface 260d is a front-side wall surface in the longitudinal direction of the vehicle 200, and is a wall surface opposed to the third wall surface 260c. The fifth wall surface 260e is an upper-side wall surface in the vertical direction of the vehicle 200. The sixth wall surface 260f is a lower-side wall surface in the vertical direction of the vehicle 200, and is a wall surface opposed to the fifth wall surface 260e.

The first electrical casing 262 and the second electrical casing 264 are separately disposed on respective two of the first wall surface 260a, the second wall surface 260b, the third wall surface 260c, the fourth wall surface 260d, the fifth wall surface 260e and the sixth wall surface 260f. For example, the first electrical casing 262 is disposed on the fifth wall surface 260e. That is, when being installed in the vehicle 200, the first electrical casing 262 is located on an upper side of the drive casing 260 in the vertical direction of the vehicle 200. When being installed in the vehicle 200, the second electrical casing 264 is arranged horizontally with respect to the drive casing 260 in the direction of the third axis CL3.

The AC charger 230 may be housed in either the first electrical casing 262 or the second electrical casing 264, or may be located on an upper side of the mechanical-electrical integrated unit 250 in the vertical direction. Further, where the electric-power control unit 220 is provided with a boost converter (not shown) including a reactor (not shown), like the above-described electric-power control unit 60, for example, the reactor is housed in the second electrical casing 264. The reactor is included in the second electrical equipment 220b.

The vehicle 200 further includes an oil cooler 240 that is provided in the second electrical casing 264. The oil cooler 240 is a water-cooling heat exchanger configured to cool an oil used for cooling the electric motor MG

The vehicle 200 further includes first water-cooling passages 270 and second water-cooling passages 272. Each of the first water-cooling passages 270 is a water-cooling passage provided in the first electrical casing 262 for cooling the first electrical equipment 220a. Each of the first water-cooling passages 270 extends in the longitudinal direction of the vehicle 200. Each of the second water-cooling passages 272 is a water-cooling passage provided in the second electrical casing 264 for cooling the second electrical equipment 220b.

The second electrical casing 264 is provided with cooler water-cooling passages 274, for example. Each of the cooler water-cooling passages 274 is a water passage that is in communication with the oil cooler 240 so as to cool the oil cooler 240. The cooler water-cooling passages 274 are in communication with the second water-cooling passages 272 on a side of the second electrical equipment 220b.

As described above, in the present second embodiment, the first electrical casing 262 and the second electrical casing 264 are separately disposed on respective two of the first wall surface 260a, the second wall surface 260b, the third wall surface 260c, the fourth wall surface 260d, the fifth wall surface 260e and the sixth wall surface 260f. Thus, the first electrical casing 262 and the second electrical casing 264 are located separately, making it easier for the mechanical-electrical integrated unit 250 to be installed in the vehicle 200. In other words, the mechanical-electrical integrated unit 250 can be made smaller in size. The oil cooler 240 is provided in the second electrical casing 264, and the second electrical casing 264 is provided with the cooler water-cooling passage 274 for cooling the oil cooler 240, such that the cooler water-cooling passage 274 is in communication with the second water-cooling passage 272 that is provided in the second electrical casing 264. Thus, the cooler water-cooling passage 274 is integrated with the second water-cooling passage 272, thereby resulting in a total of two water passages for cooling. In other words, it is possible to eliminate a water pipe or water passage dedicated exclusively to the oil cooler 240. Thus, the cooling structure can be simplified while increasing the degree of freedom of installation of the mechanical-electrical integrated unit 250.

In the present second embodiment, the second electrical casing 264 is located on one of the opposite sides of the drive casing 260 which are opposite to each other in the horizontal direction and in the direction of the third axis CL3, while the first electrical casing 262 is located on the upper side of the drive casing 260 in the vertical direction. These arrangements make it easier for the mechanical-electrical integrated unit 250 to be appropriately installed in the vehicle 200. Further, since the oil cooler 240 provided in the second electrical casing 264 is located on one of the opposite sides of the electric motor MG in the direction of the third axis CL3, thereby making it possible to simplify the cooling structure of the electric motor MG.

In the present second embodiment, the first electrical equipment 220a includes the inverter 226, and the second electrical equipment 220b includes the DC-DC converter 222. Owing to these arrangements, the inverter 226 and the DC-DC converter 222 can be appropriately cooled by the simple cooling structure. In addition, the inverter 226 and the DC-DC converter 222 are disposed separately, so that each of the electric motor MG and the inverter 226 can be easily connected to each other, and maintenance performance of the DC-DC converter 222 can be improved.

### THIRD EMBODIMENT

In the above-described first embodiment, the electric vehicle 10 is a hybrid electric vehicle provided with the engine 12, the first electric motor MG1 and the second electric motor MG2. In this second embodiment, there will be described a hybrid electric vehicle 300 as an example of the electric vehicle, wherein the electric vehicle 300 (hereinafter simply referred to as "vehicle 300") is a parallel hybrid electric vehicle that includes an engine, an electric motor and a power transmission device configured to transmit a power of the engine and a power of the electric motor, to drive wheels.

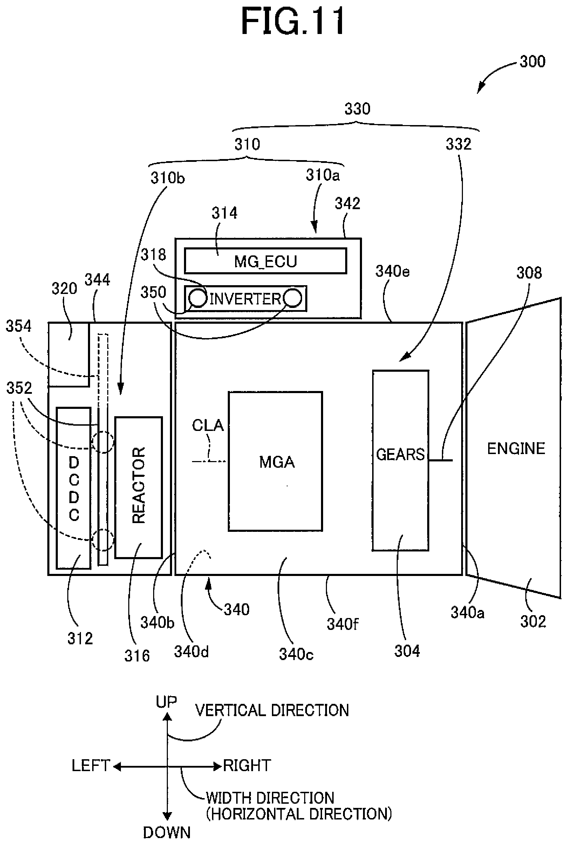

FIG 11 is a view showing, by way of example, a construction of the vehicle 300, and showing, positions of respective components of a mechanical-electrical integrated unit 330 of the vehicle 300, as seen from a rear side of the vehicle 300.

As shown in FIG 11, the vehicle 300 is a hybrid electric vehicle provided with an engine 302, an assisting electric motor MGA and a power transmission device 304 to which the assisting electric motor MGA is connected in a power transmittable manner. The engine 302 is a power source connected to the power transmission device 304 in a power transmittable manner. The assisting electric motor MGA is an electric motor serving as a power source connected to the power transmission device 304 in a power transmittable manner. The assisting electric motor MGA and the power transmission device 304 are disposed in a casing 306.

Like the vehicle 10, the vehicle 300 has the electrical configuration for controlling the assisting electric motor MGA, for example. The vehicle 300 further includes an electric-power control unit 310. The electric-power control unit 310 includes a DC-DC converter 312, an electric-motor control device 314 (see "MG_ECU" in FIG 11), a reactor 316 of a boost converter (not shown) and an inverter 318.

The mechanical-electrical integrated unit 330 is constituted by a drive apparatus 332 and the electric-power control unit 310 that are integrally arranged. The drive apparatus 332 is a transaxle that includes the power transmission device 304 and the assisting electric motor MGA. The electric-power control unit 310 is sectioned into first electrical equipment 310a and second electrical equipment 310b. The first electrical equipment 310a includes the electric-motor control device 314 and the inverter 318, for example. The second electrical equipment 310b includes the DC-DC converter 312 and the reactor 316, for example.

The vehicle 300 includes a drive casing 340, a first electrical casing 342 and a second electrical casing 344. The drive casing 340 is a casing having a space that houses the drive apparatus 332. The first electrical casing 342 is a casing having a space that houses the first electrical equipment 310a. The second electrical casing 344 is a casing having a space that houses the second electrical equipment 310b. The mechanical-electrical integrated unit 330 is a unit in which the drive casing 340, the first electrical casing 342 and the second electrical casing 344 are integrally arranged. The casing 306 can be regarded to be constituted by the drive casing 340, the first electrical casing 342 and the second electrical casing 344 that are integrally arranged.

The drive casing 340 has a first wall surface 340a, a second wall surface 340b, a third wall surface 340c, a fourth wall surface 340d, a fifth wall surface 340e and a sixth wall surface 340f that cooperate to define a space that houses the drive apparatus 332. The first wall surface 340a is a right-side wall surface in the width direction of the vehicle 300. The engine 302 is connected to an input shaft 308 of the power transmission device 304 on a side of the first wall surface 340a. The second wall surface 340b is a left-side wall surface in the width direction of the vehicle 300, and is a wall surface opposed to the first wall surface 340a. The third wall surface 340c is a rear-side wall surface in the longitudinal direction of the vehicle 300. The fourth wall surface 340d is a front-side wall surface in the longitudinal direction of the vehicle 300, and is a wall surface opposed to the third wall surface 340c. The fifth wall surface 340e is an upper-side wall surface in the vertical direction of the vehicle 300. The sixth wall surface 340f is a lower-side wall surface in the vertical direction of the vehicle 300, and is a wall surface opposed to the fifth wall surface 340e.

The engine 302 is disposed on the first wall surface 340a. That is, when being installed in the vehicle 300, the engine 302 is located to be adjacent to the drive casing 340 in the horizontal direction. When being installed in the vehicle 300, the engine 302 is disposed on one of the first wall surface 340a, the second wall surface 340b, the third wall surface 340c, the fourth wall surface 340d, the fifth wall surface 340e and the sixth wall surface 340f, which is opposed to the engine 302 in a direction of an axis CLA of the assisting electric motor MGA.

The first electrical casing 342 and the second electrical casing 344 are separately disposed on respective two of the first wall surface 340a, the second wall surface 340b, the third wall surface 340c, the fourth wall surface 340d, the fifth wall surface 340e and the sixth wall surface 340f. However, in the present embodiment in which the engine 302 is disposed on the first wall surface 340a, the first electrical casing 342 and the second electrical casing 344 are separately disposed on respective two of five wall surfaces excluding the first wall surface 340a. For example, the first electrical casing 342 is disposed on the fifth wall surface 340e. That is, when being installed in the vehicle 300, the first electrical casing 342 is located adjacent to the drive casing 340 and on an upper side of the drive casing 340 in the vertical direction of the vehicle 300. Further, the second electrical casing 344 is disposed on the second wall surface 340b. That is, when being installed in the vehicle 300, the second electrical casing 344 is located adjacent to the drive casing 340 and on one of both sides of the drive casing 340 that is remote from the engine 302. Thus, when being installed in the vehicle 300, the second electrical casing 344 is arranged horizontally with respect to the drive casing 340 in the direction of the axis CLA of the assisting electric motor MGA.

The vehicle 300 further includes an oil cooler 320 that is provided in the second electrical casing 344. The oil cooler 320 is a water-cooling heat exchanger configured to cool an oil used for cooling the assisting electric motor MGA.

The vehicle 300 further includes first water-cooling passages 350 and second water-cooling passages 352. Each of the first water-cooling passages 350 is a water-cooling passage provided in the first electrical casing 342 for cooling the first electrical equipment 310a. Each of the first water-cooling passages 350 extends in the longitudinal direction of the vehicle 300. Each of the second water-cooling passages 352 is a water-cooling passage provided in the second electrical casing 344 for cooling the second electrical equipment 310b.

The second electrical casing 344 is provided with cooler water-cooling passages 354, for example. Each of the cooler water-cooling passages 354 is a water passage that is in communication with the oil cooler 320 so as to cool the oil cooler 320. The cooler water-cooling passages 354 are in communication with the second water-cooling passages 352 on a side of the second electrical equipment 310b.

As described above, in this third embodiment, it is possible to obtain substantially the same effects as in the above-described first embodiment.

While the preferred embodiments of this invention have been described in detail by reference to the drawings, it is to be understood that the invention may be otherwise embodied.

For example, in the above-described first embodiment, the oil cooler 86 is provided in the second electrical casing 104. However, the oil cooler 86 may be provided in the first electrical casing 102, for example. In this case, the cooler water-cooling passages 114 are adapted to be in communication with the first water-cooling passages 110. The same descriptions may be applied to the above-described second and third embodiments, too.

In the above-described first embodiment, the second water-cooling passages 112 are located between the DC-DC converter 62 and the reactor 70. However, the DC-DC converter 62 and the reactor 70 may be located on the same side with respect to the second water-cooling passages 112.

In the above-described first embodiment, the second wall surface 100b and the fifth wall surface 100e are exemplified as wall surfaces on which the first electrical casing 102 and the second electrical casing 104 are disposed. However, the present invention is not limited to this arrangement, as long as the first electrical casing 102 and the second electrical casing 104 are disposed are separately disposed on respective two of five wall surfaces which consist of five of the first wall surface 100a, the second wall surface 100b, the third wall surface 100c, the fourth wall surface 100d, the fifth wall surface 100e and the sixth wall surface 100f, and which exclude one of the first wall surface 100a, the second wall surface 100b, the third wall surface 100c, the fourth wall surface 100d, the fifth wall surface 100e and the sixth wall surface 100f on which the engine 12 is disposed. Therefore, the first electrical casing 102 may be disposed on the second wall surface 100b while the second electrical casing 104 may be disposed on the fifth wall surface 100e. The same descriptions may be applied to the above-described third embodiment, too.

In the above-described second embodiment, the first wall surface 260a and the fifth wall surface 260e are exemplified as wall surfaces on which the first electrical casing 262 and the second electrical casing 264 are disposed. However, the present invention is not limited to this arrangement, as long as the first electrical casing 262 and the second electrical casing 264 are disposed are separately disposed on respective two of six wall surfaces which consist of the first wall surface 260a, the second wall surface 260b, the third wall surface 260c, the fourth wall surface 260d, the fifth wall surface 260e and the sixth wall surface 260f. Therefore, the second electrical casing 264 may be disposed on the second wall surface 260b. Alternatively, the first electrical casing 262 may be disposed on the first wall surface 260a while the second electrical casing 264 may be disposed on the fifth wall surface 260e.

In the above-described first embodiment, the electric vehicle 10 may be a so-called plug-in-hybrid electric vehicle in which the high-voltage battery 50 is chargeable with an electric power supplied from an external power source. In this case, a charger, which is included in the vehicle 10, may be housed in one of the first electrical casing 102 and the second electrical casing 104. Alternatively, the charger may be disposed on an upper side of the first electrical casing 102 in the vertical direction. For example, where the electric-power control unit 60 is not provided with the boost converter 66 including the reactor 70, the charger may be housed in the second electrical casing 104. The same descriptions may be applied to the above-described third embodiment, too.

In the above-described first embodiment, the DC-DC plate 94 to which the second electrical equipment 60b is fixed is attached to the cover 18c. However, the present invention is not limited to this arrangement. For example, the second electrical equipment 60b may be fixed to a portion of the cover 18c which is on a side of the main body 18b. In this case, the DC-DC space Sdc is formed in the cover 18c, with the cover 18c being connected to the main body 18b.

Further, the electric vehicle, to which the present invention is applied, may be a series hybrid electric vehicle including: an engine; a driving electric motor serving as a power source; and an electric-power supplying electric motor which is connected to the engine in a power transmittable manner and which is configured to generate an electric power by a power of the engine. In such a series hybrid electric vehicle, the driving electric motor generates a power owing to the electric power generated by the power of the engine, so that the engine serves as a power source. Further, in such a series hybrid electric vehicle, a power transmission path between the engine and drive wheels may be selectively connected and disconnected by operation of a clutch.

In the above-described first embodiment, each of the first wall surface 100a, second wall surface 100b, third wall surface 100c, fourth wall surface 100d, fifth wall surface 100e and sixth wall surface 100f of the drive casing 100 has not be necessarily a flat surface. Each of the first wall surface 100a, second wall surface 100b, third wall surface 100c, fourth wall surface 100d, fifth wall surface 100e and sixth wall surface 100f may include a recessed or protruding portion, for example, as long as these wall surfaces 100a, 100b, 100c, 100d, 100e, 100f can form a space in which the drive apparatus 92 is housed. The same descriptions may be applied to the first wall surface 260a, second wall surface 260b, third wall surface 260c, fourth wall surface 260d, fifth wall surface 260e and sixth wall surface 260f in the above-described second embodiment. The same descriptions may be applied to the first wall surface 340a, second wall surface 340b, third wall surface 340c, fourth wall surface 340d, fifth wall surface 340e and sixth wall surface 340f in the above-described third embodiment.

It is to be understood that the embodiments described above are given for illustrative purpose only, and that the present invention as defined by the claims may be embodied with various modifications and improvements which may occur to those skilled in the art.

### NOMENCLATURE OF ELEMENTS

10: electric vehicle (hybrid electric vehicle)
12: engine
16: power transmission device
50: high-voltage battery
52: auxiliary battery (low-voltage battery)
60a: first electrical equipment
60b: second electrical equipment
62: DC-DC converter
66: boost converter
68: inverter
70: reactor
86: oil cooler
90: mechanical-electrical integrated unit
92: drive apparatus
100: drive casing
100a: first wall surface
100b: second wall surface
100c: third wall surface
100d: fourth wall surface
100e: fifth wall surface
100f: sixth wall surface
102: first electrical casing
104: second electrical casing
110: first water-cooling passage
112: second water-cooling passage
114: cooler water-cooling passage
CL1: first axis (rotation axis of electric motor)
CL3: third axis (rotation axis of electric motor)
MG1: first electric motor (electric motor)
MG2: second electric motor (electric motor)
300: electric vehicle (hybrid electric vehicle)
302: engine
304: power transmission device
310a: first electrical equipment
310b: second electrical equipment
312: DC-DC converter
316: reactor
318: inverter
320: oil cooler
330: mechanical-electrical integrated unit
332: drive apparatus
340: drive casing
340a: first wall surface
340b: second wall surface
340c: third wall surface
340d: fourth wall surface
340e: fifth wall surface
340f: sixth wall surface
342: first electrical casing
344: second electrical casing
350: first water-cooling passage
352: second water-cooling passage
354: cooler water-cooling passage
CLA: rotation axis (axis of electric motor)
MGA: assisting electric motor (electric motor)

## Claims

1. A hybrid electric vehicle (10;300) comprising:
an electric motor (MG1,MG2;MGA);
a power transmission device (16;304) to which the electric motor (MG1,MG2;MGA) is connected in a power transmittable manner;
first electrical equipment (60a;310a);
second electrical equipment (60b:310b);
a drive casing (100;340) that houses a drive apparatus (92;332) including the electric motor MG1,MG2;MGA) and the power transmission device (16;304);
a first electrical casing (102;342) that houses the first electrical equipment (60a;310a); and
a second electrical casing (104;344) that houses the second electrical equipment (60b;310b),
wherein the drive casing (100;340), the first electrical casing (102;342) and the second electrical casing (104;344) are integrally arranged, and cooperate to constitute a mechanical-electrical integrated unit (90;330),
the hybrid electric vehicle (10;300) further comprises:
a first water-cooling passage (110;350) that is provided in the first electrical casing (102;342) for cooling the first electrical equipment (60a;310a);
a second water-cooling passage (112;352) that is provided in the second electrical casing (104;344) for cooling the second electrical equipment (60b;310b); and
a water-cooling oil cooler (86;320) configured to cool an oil for cooling the electric motor (MG1,MG2;MGA),
wherein the drive casing (100;340) has a first wall surface (100a;340a), a second wall surface (100b;340b), a third wall surface (100c;340c), a fourth wall surface (100d;340d), a fifth wall surface (100e;340e) and a sixth wall surface (100f;340f) that cooperate to define a space in which the drive apparatus (92;332) is housed,
wherein the first electrical casing (102;342) and the second electrical casing (104;344) are separately disposed on respective two of the first wall surface (100a;340a), the second wall surface (100b;340b), the third wall surface (100c;340c), the fourth wall surface (100d;340d), the fifth wall surface (100e;340e) and the sixth wall surface (100f;340f),
**characterized in that** the water-cooling oil cooler (86;320) is disposed in one of the first electrical casing (102;342) and the second electrical casing (104;344), and
wherein the one of the first electrical casing (102;342) and the second electrical casing (104;344) is provided with a cooler water-cooling passage (114;354) for cooling the water-cooling oil cooler (86;320), such that the cooler water-cooling passage (114;354) is in communication with one of the first water-cooling passage (110;350) and the second water-cooling passage (112;352) which is provided in the one of the first electrical casing (102;342) and the second electrical casing (104;344).

2. The hybrid electric vehicle (10;300) according to claim 1,
wherein the one of the first electrical casing (102;342) and the second electrical casing (104;344) is located on one of opposite sides of the drive casing (100;340) which are opposite to each other in a horizontal direction of the hybrid electric vehicle (10;300) and in a direction of an axis of the electric motor (MG1,MG2;MGA), and
wherein the other of the first electrical casing (102;342) and the second electrical casing (104;344) is located on an upper side of the drive casing (100;340) in a vertical direction of the hybrid electric vehicle (10;300).

3. The hybrid electric vehicle (10;300) according to claim 1, further comprising an engine (12;302) that is connected to the power transmission device (16;304) in a power transmittable manner,
wherein the engine (12;302) is located on one of opposite sides of the drive casing (100;340) which are opposite to each other in a horizontal direction of the electric vehicle (10;300), and is disposed on one of the first wall surface (100a;340a), the second wall surface (100b;340b), the third wall surface (100c;340c), the fourth wall surface (100d;340d), the fifth wall surface (100e;340e) and the sixth wall surface (100f;340f), which is opposed to the engine (12;302) in a direction of an axis of the electric motor (MG1,MG2;MGA),
wherein the one of the first electrical casing (102;342) and the second electrical casing (104;344) is located on the other of the opposite sides of the drive casing (100;340) in the horizontal direction, and
wherein the other of the first electrical casing (102;342) and the second electrical casing (104;344) is located on an upper side of the drive casing (100;340) in a vertical direction of the hybrid electric vehicle (10;300).

4. The hybrid electric vehicle (10;300) according to any one of claims 1-3, further comprising a high-voltage battery (50) and a low-voltage battery (52), wherein the first electrical equipment (60a;310a) includes an inverter (68;318) that is configured to convert a DC power supplied from the high-voltage battery (50), into an AC power that is to be supplied to the electric motor (MG1,MG2;MGA), and
wherein the second electrical equipment (60b;310b) includes a DC-DC converter (62;312) that is configured to lower a voltage of the high-voltage battery (50) and to charge the low-voltage battery (52).

5. The hybrid electric vehicle (10;300) according to claim 4,
wherein the second electrical equipment (60b;310b) further include a reactor (70;316) included in a boost converter (66) that is configured to boost the DC power supplied from the high-voltage battery (50) and to supply the boosted DC power to the inverter (68;318).

## Patentansprüche

1. Hybridelektrofahrzeug (10; 300), umfassend:
einen Elektromotor (MG1, MG2; MGA);
eine Kraftübertragungsvorrichtung (16; 304), mit der der Elektromotor (MG1, MG2; MGA) kraftübertragend verbunden ist;
eine erste elektrische Ausrüstung (60a; 310a);
eine zweite elektrische Ausrüstung (60b:310b);
ein Antriebsgehäuse (100; 340), das eine Antriebsvorrichtung (92; 332) einschließlich des Elektromotors (MG1, MG2; MGA) und der Kraftübertragungsvorrichtung (16; 304) aufnimmt;
ein erstes elektrisches Gehäuse (102; 342), das die erste elektrische Ausrüstung (60a; 310a) aufnimmt; und
ein zweites elektrisches Gehäuse (104; 344), das die zweite elektrische Ausrüstung (60b; 310b) aufnimmt; und
wobei das Antriebsgehäuse (100; 340), das erste elektrische Gehäuse (102; 342) und das zweite elektrische Gehäuse (104; 344) integral angeordnet sind und zusammenwirken, um eine mechanisch-elektrische integrierte Einheit (90; 330) zu bilden,
das Hybridelektrofahrzeug (10; 300) ferner umfasst:
einen ersten Wasserkühlkanal (110; 350), der in dem ersten elektrischen Gehäuse (102; 342) zum Kühlen der ersten elektrischen Ausrüstung (60a; 310a) vorgesehen ist;
einen zweiten Wasserkühlkanal (112; 352), der in dem zweiten elektrischen Gehäuse (104; 344) zum Kühlen der zweiten elektrischen Ausrüstung (60b; 310b) vorgesehen ist;
einen wassergekühlten Ölkühler (86; 320), der ausgelegt ist, ein Öl zum Kühlen des Elektromotors (MG1, MG2; MGA) zu kühlen,
wobei das Antriebsgehäuse (100; 340) eine erste Wandfläche (100a; 340a), eine zweite Wandfläche (100b; 340b), eine dritte Wandfläche (100c; 340c), eine vierte Wandfläche (100d; 340d), eine fünfte Wandfläche (100e; 340e) und eine sechste Wandfläche (100f; 340f) aufweist, die zusammenwirken, um einen Raum zu definieren, in dem die Antriebsvorrichtung (92; 332) aufgenommen ist,
wobei das erste elektrische Gehäuse (102; 342) und das zweite elektrische Gehäuse (104; 344) separat auf jeweiligen zwei von der ersten Wandfläche (100a; 340a), der zweiten Wandfläche (100b; 340b), der dritten Wandfläche (100c; 340c), der vierten Wandfläche (100d; 340d), der fünften Wandfläche (100e; 340e) und der sechsten Wandfläche (100f; 340f) angeordnet sind,
**dadurch gekennzeichnet, dass** der wassergekühlte Ölkühler (86; 320) in einem von dem ersten elektrischen Gehäuse (102; 342) und dem zweiten elektrischen Gehäuse (104; 344) angeordnet ist, und
wobei das eine von dem ersten elektrischen Gehäuse (102; 342) und dem zweiten elektrischen Gehäuse (104; 344) mit einem Kühlerwasserkühlkanal (114; 354) zum Kühlen des wassergekühlten Ölkühlers (86; 320) versehen ist, sodass der Kühlerwasserkühlkanal (114; 354) mit einem von dem ersten Wasserkühlkanal (110; 350) und dem zweiten Wasserkühlkanal (112; 352), der in dem einen von dem ersten elektrischen Gehäuse (102; 342) und dem zweiten elektrischen Gehäuse (104; 344) vorgesehen ist, in Verbindung steht.

2. Hybridelektrofahrzeug (10; 300) nach Anspruch 1,
wobei das eine von dem ersten elektrischen Gehäuse (102; 342) und dem zweiten elektrischen Gehäuse (104; 344) auf einer von einander gegenüberliegenden Seiten des Antriebsgehäuses (100; 340) angeordnet ist, die einander in einer Horizontalrichtung des Hybridelektrofahrzeugs (10; 300) und in einer Richtung einer Achse des Elektromotors (MG1, MG2; MGA) gegenüberliegen, und
wobei das andere von dem ersten elektrischen Gehäuse (102; 342) und dem zweiten elektrischen Gehäuse (104; 344) auf einer Oberseite des Antriebsgehäuses (100; 340) in einer Vertikalrichtung des Hybridelektrofahrzeugs (10; 300) angeordnet ist.

3. Hybridelektrofahrzeug (10; 300) nach Anspruch 1, ferner umfassend einen Motor (12; 302), der mit der Kraftübertragungsvorrichtung (16; 304) kraftübertragend verbunden ist,
wobei der Motor (12; 302) auf einer von einander gegenüberliegenden Seiten des Antriebsgehäuses (100; 340) angeordnet ist, die einander in einer Horizontalrichtung des Hybridelektrofahrzeugs (10; 300) gegenüberliegen, und an einer von der ersten Wandfläche (100a; 340a), der zweiten Wandfläche (100b; 340b), der dritten Wandfläche (100c; 340c), der vierten Wandfläche (100d; 340d), der fünften Wandfläche (100e; 340e) und der sechsten Wandfläche (100f; 340f) angeordnet ist, die dem Motor (12; 302) in einer Richtung einer Achse des Elektromotors (MG1, MG2; MGA) gegenüberliegt,
wobei das eine von dem ersten elektrischen Gehäuse (102; 342) und dem zweiten elektrischen Gehäuse (104; 344) auf der anderen der einander gegenüberliegenden Seiten des Antriebsgehäuses (100; 340) in der Horizontalrichtung angeordnet ist, und
wobei das andere von dem ersten elektrischen Gehäuse (102; 342) und dem zweiten elektrischen Gehäuse (104; 344) auf einer Oberseite des Antriebsgehäuses (100; 340) in einer Vertikalrichtung des Hybridelektrofahrzeugs (10; 300) angeordnet ist.

4. Hybridelektrofahrzeug (10; 300) nach einem der Ansprüche 1-3, ferner umfassend eine Hochspannungsbatterie (50) und eine Niederspannungsbatterie (52),
wobei die erste elektrische Ausrüstung (60a; 310a) einen Wechselrichter (68; 318) umfasst, der ausgelegt ist, eine von der Hochspannungsbatterie (50) gelieferte Gleichstromleistung in eine an den Elektromotor (MG1, MG2; MGA) zu liefernde Wechselstromleistung umzuwandeln, und
wobei die zweite elektrische Ausrüstung (60b; 310b) einen DC-DC-Wandler (62; 312) umfasst, der ausgelegt ist, eine Spannung der Hochspannungsbatterie (50) herabzusetzen und die Niederspannungsbatterie (52) zu laden.

5. Hybridelektrofahrzeug (10; 300) nach Anspruch 4, wobei die zweite elektrische Ausrüstung (60b; 310b) ferner eine Drosselspule (70; 316) umfasst, die in einem Hochsetzsteller (66) enthalten ist, der ausgelegt ist, die von der Hochspannungsbatterie (50) gelieferte Gleichstromleistung hochzusetzen und die hochgesetzte Gleichstromleistung an den Wechselrichter (68; 318) zu liefern.

## Revendications

1. Véhicule électrique hybride (10 ; 300) comprenant :
un moteur électrique (MG1, MG2 ; MGA) ;
un dispositif de transmission de puissance (16 ; 304) auquel le moteur électrique (MG1, MG2 ; MGA) est connecté d'une manière à pouvoir transmettre de la puissance ;
un premier équipement électrique (60a ; 310a) ;
un deuxième équipement électrique (60b ; 310b) ;
un boîtier d'entraînement (100 ; 340) qui loge un appareil d'entraînement (92 ; 332) incluant le moteur électrique (MG1, MG2 ; MGA) et le dispositif de transmission de puissance (16 ; 304) ;
un premier boîtier électrique (102 ; 342) qui loge le premier équipement électrique (60a ; 310a) ; et
un deuxième boîtier électrique (104 ; 344) qui loge le deuxième équipement électrique (60b ; 310b),
dans lequel le boîtier d'entraînement (100 ; 340), le premier boîtier électrique (102 ; 342) et le deuxième boîtier électrique (104 ; 344) sont agencés d'un seul tenant, et coopèrent pour constituer une unité intégrée mécanique-électrique (90 ; 330),
le véhicule électrique hybride (10 ; 300) comprend en outre :
un premier passage de refroidissement à eau (110 ; 350) qui est prévu dans le premier boîtier électrique (102 ; 342) pour refroidir le premier équipement électrique (60a ; 310a) ;
un deuxième passage de refroidissement à eau (112 ; 352) qui est prévu dans le deuxième boîtier électrique (104 ; 344) pour refroidir le deuxième équipement électrique (60b ; 310b) ; et
un refroidisseur d'huile par refroidissement à eau (86 ; 320) configuré pour refroidir une huile pour refroidir le moteur électrique (MG1, MG2 ; MGA),
dans lequel le boîtier d'entraînement (100 ; 340) a une première surface de paroi (100a ; 340a), une deuxième surface de paroi (100b ; 340b), une troisième surface de paroi (100c ; 340c), une quatrième surface de paroi (100d ; 340d), une cinquième surface de paroi (100e ; 340e) et une sixième surface de paroi (100f ; 340f) qui coopèrent pour définir un espace dans lequel l'appareil d'entraînement (92 ; 332) est logé,
dans lequel le premier boîtier électrique (102 ; 342) et le deuxième boîtier électrique (104 ; 344) sont disposés séparément sur deux surfaces de paroi respectives parmi la première surface de paroi (100a ; 340a), la deuxième surface de paroi (100b ; 340b), la troisième surface de paroi (100c ; 340c), la quatrième surface de paroi (100d ; 340d), la cinquième surface de paroi (100e ; 340e) et la sixième surface de paroi (100f ; 340f),
**caractérisé en ce que** le refroidisseur d'huile par refroidissement à eau (86 ; 320) est disposé dans l'un du premier boîtier électrique (102 ; 342) et du deuxième boîtier électrique (104 ; 344), et
dans lequel l'un du premier boîtier électrique (102 ; 342) et du deuxième boîtier électrique (104 ; 344) est pourvu d'un passage de refroidissement à eau de refroidisseur (114 ; 354) pour refroidir le refroidisseur d'huile par refroidissement à eau (86 ; 320), de telle sorte que le passage de refroidissement à eau de refroidisseur (114 ; 354) soit en communication avec l'un du premier passage de refroidissement à eau (110 ; 350) et du deuxième passage de refroidissement à eau (112 ; 352) qui est prévu dans l'un du premier boîtier électrique (102 ; 342) et du deuxième boîtier électrique (104 ; 344).

2. Véhicule électrique hybride (10 ; 300) selon la revendication 1,
dans lequel l'un du premier boîtier électrique (102 ; 342) et du deuxième boîtier électrique (104 ; 344) est situé sur l'un de côtés opposés du boîtier d'entraînement (100 ; 340) qui sont opposés l'un à l'autre dans une direction horizontale du véhicule électrique hybride (10 ; 300) et dans une direction d'un axe du moteur électrique (MG1, MG2 ; MGA), et
dans lequel l'autre du premier boîtier électrique (102 ; 342) et du deuxième boîtier électrique (104 ; 344) est situé sur un côté supérieur du boîtier d'entraînement (100 ; 340) dans une direction verticale du véhicule électrique hybride (10 ; 300).

3. Véhicule électrique hybride (10 ; 300) selon la revendication 1, comprenant en outre un moteur (12 ; 302) qui est connecté au dispositif de transmission de puissance (16 ; 304) d'une manière à pouvoir transmettre de la puissance,
dans lequel le moteur (12 ; 302) est situé sur l'un de côtés opposés du boîtier d'entraînement (100 ; 340) qui sont opposés l'un à l'autre dans une direction horizontale du véhicule électrique (10 ; 300), et est disposé sur l'une de la première surface de paroi (100a ; 340a), de la deuxième surface de paroi (100b ; 340b), de la troisième surface de paroi (100c ; 340c), de la quatrième surface de paroi (100d ; 340d), de la cinquième surface de paroi (100e ; 340e) et de la sixième surface de paroi (100f ; 340f), qui est opposée au moteur (12 ; 302) dans une direction d'un axe du moteur électrique (MG1, MG2 ; MGA),
dans lequel l'un du premier boîtier électrique (102 ; 342) et du deuxième boîtier électrique (104 ; 344) est situé sur l'autre des côtés opposés du boîtier d'entraînement (100 ; 340) dans la direction horizontale, et
dans lequel l'autre du premier boîtier électrique (102 ; 342) et du deuxième boîtier électrique (104 ; 344) est situé sur un côté supérieur du boîtier d'entraînement (100 ; 340) dans une direction verticale du véhicule électrique hybride (10 ; 300).

4. Véhicule électrique hybride (10 ; 300) selon l'une quelconque des revendications 1 à 3, comprenant en outre une batterie haute tension (50) et une batterie basse tension (52),
dans lequel le premier équipement électrique (60a ; 310a) inclut un onduleur (68 ; 318) qui est configuré pour convertir une puissance CC fournie à partir de la batterie haute tension (50), en une puissance CA qui doit être fournie au moteur électrique (MG1, MG2 ; MGA), et
dans lequel le deuxième équipement électrique (60b ; 310b) inclut un convertisseur CC-CC (62 ; 312) qui est configuré pour abaisser une tension de la batterie haute tension (50) et pour charger la batterie basse tension (52).

5. Véhicule électrique hybride (10 ; 300) selon la revendication 4,
dans lequel le deuxième équipement électrique (60b ; 310b) inclut en outre un réacteur (70 ; 316) inclus dans un convertisseur survolteur (66) qui est configuré pour survolter la puissance CC fournie à partir de la batterie haute tension (50) et pour fournir la puissance CC survoltée à l'onduleur (68 ; 318).
